# EUROPÄISCHE PATENTSCHRIFT

(11) **EP 3 365 492 B1**
(45) Veröffentlichungstag und Bekanntmachung des Hinweises auf die Patenterteilung: **05.07.2023**
(21) Anmeldenummer: 16784209.5
(22) Anmeldetag: 20.10.2016
(51) Int. Cl.: B66C 15/00, B66D 1/54, B66B 7/12, D07B 1/14, D07B 1/02, D07B 1/00, G01N 21/952

(54) **HOCHFESTES FASERSEIL FÜR HEBEZEUGE WIE KRANE**
HIGH-STRENGTH FIBER ROPE FOR LIFTING DEVICES SUCH AS CRANES
CÂBLE DE FIBRE À HAUTE RÉSISTANCE POUR ENGINS DE LEVAGE TELS QUE DES GRUES

(30) Priorität: 21.10.2015 DE 102015013604
(43) Veröffentlichungstag der Anmeldung: 29.08.2018
(73) Patentinhaber: Teufelberger Fiber Rope GmbH, 4600 Wels (AT)
(72) Erfinder: BALDINGER, Peter, 4311 Schwertberg (AT); TRAXL, Robert, 4802 Ebensee (AT); KAISER, Gunter, 4600 Thalheim/Wels (AT); KIRTH, Rudolf, 4840 Vöcklabruck (AT); ERNST, Björn, 4810 Gmunden (AT); RÜHRNÖSSL, Erich, 4053 Haid (AT)
(74) Vertreter: Nemec, Harald
(86) Internationale Anmeldenummer: PCT/EP2016/075251
(87) Internationale Veröffentlichungsnummer: WO 2017/068054

(56) Entgegenhaltungen:
- EP-A1- 2 434 050
- EP-B1- 2 434 050
- DE-U1-202009 014 031

## Beschreibung

Die vorliegende Erfindung betrifft ein hochfestes Faserseil für Hebezeuge wie Krane, mit einem Seilkern, der hochfeste Kunststofffasern umfasst, sowie einer den Seilkern umgebenden, verschleißanzeigenden Ummantelung.

Seit geraumer Zeit wird in der Hebetechnik und insbesondere bei Kranen versucht, die üblichen, schweren Stahlseile durch hochfeste Faserseile zu ersetzen, die aus hochfesten Kunstfasern wie beispielsweise. Aramidfasern (HMPA), Aramid-/ Kohlefasergemischen, hochmodularen Polyethylenfasern (HMPE), oder Poly(p-phenylene-2,6-benzobisoxazole)-Fasern (PBO) bestehen oder zumindest derartige Fasern aufweisen. Durch die Gewichtsersparnis gegenüber Stahlseilen von bis zu 80% bei annähernd gleicher Bruchfestigkeit kann die Traglast bzw. die zulässige Hublast erhöht werden, da das für die Traglast zu berücksichtigende Eigengewicht des Seils deutlich geringer ist. Gerade bei Kranen mit großer Hubhöhe, oder in Auslegern oder Mastverstellwerken mit Flaschenzügen hoher Einscherungszahl kommen beträchtliche Seillängen und damit auch ein entsprechendes Seilgewicht zustande, sodass die durch hochfeste Faserseile mögliche Gewichtsreduzierung sehr vorteilhaft ist. Zusätzlich zum Gewichtsvorteil des Faserseiles selbst kommt hinzu, dass die Verwendung von Faserseilen auch eine Gewichtsersparnis bei weiteren Komponenten ermöglicht. Beispielsweise kann der Lasthaken leichter ausgeführt werden, da zur Seilspannung eines Faserseils weniger Lasthakengewicht notwendig ist. Zum anderen erlaubt die gute Biegsamkeit von Synthetikfaserseilen kleinere Biegeradien und damit kleinere Seilscheiben bzw. -rollen am Kran, was zu einer weiteren Gewichtsreduzierung insbesondere im Bereich von Kranauslegern führt, sodass bei großen Kranausladungen eine erhebliche Lastmomentsteigerung erreicht werden kann.

Zusätzlich zu den genannten Gewichtsvorteilen zeichnen sich Seiltriebe mit Kunstfaserseilen durch eine beträchtlich größere Lebensdauer, leichtes Hantieren und gute Biegsamkeit sowie die nicht mehr notwendige Seilschmierung aus. Insgesamt kann hierdurch eine größere Geräteverfügbarkeit erzielt werden.

Eine Schwierigkeit bei solchen hochfesten Faserseilen besteht jedoch darin, deren Ablegereife präzise und verlässlich vorherzusagen bzw. zu bestimmen. Hochfeste Faserseile sind wie Stahlseile Verschleißteile, die ausgetauscht werden müssen, wenn sich ihr Zustand soweit verschlechtert hat, dass bei weiterem Betrieb die erforderliche Sicherheit nicht mehr gegeben ist. Diesen Zustand bezeichnet man allgemein als Ablegereife.

Bei herkömmlichen Stahlseilen ist die Ablegereife in an sich recht einfacher Weise durch Inaugenscheinnahme des Seilzustandes ermittelbar, wobei die Vorgehensweise bei der Prüfung und der Prüfungsumfang in der Norm ISO 4309 vorgegeben wird. Im Wesentlichen wird dabei auf die Anzahl der Drahtbrüche über eine bestimmte Messlänge des Seiles, eine Verringerung des Seildurchmessers sowie auf Litzenbrüche abgestellt. Diese Messmethode ist jedoch zur Erkennung der Ablegereife bei hochfesten Faserseilen nicht möglich, da sich die verwendeten Synthetikfasern nicht so verhalten wie Drahtlitzen. Insbesondere kommt es bei hochfesten Faserseilen oft zu einem schlagartigen Versagen bzw. einem Eintreten der Ablegereife ohne nach und nach erkennbare Vorschädigungen, da anders als bei Stahlseilen oftmals nicht einzelne Fasern nach und nach reißen und aufspleißen, sondern oft gleichzeitig mehrere Faserstränge versagen.

Aus der Schrift DE 20 2009 014 031 U1 ist ein hochfestes Faserseil aus Synthetikfasern bekannt, bei dem ein Seilkern mit einer Ummantelung versehen wird, die anders eingefärbt ist als der Seilkern und selbst wiederum verschiedene Mantelschichten unterschiedlicher Farbe besitzt. Durch diese verschiedenfarbige Einfärbung soll es leichter erkennbar sein, wenn durch Abrieb einer äußeren Schicht eine andersfarbige, darunterliegende Schicht oder gar der Seilkern zum Vorschein kommt. In der Praxis leidet diese an sich sinnvolle Farbindikatorfunktion jedoch daran, dass die Ummantelung aufgrund der Eigenschaften hochfester Synthetikfasern dazu neigt, insgesamt recht schlagartig zu versagen, sodass es wiederum schwierig ist, die Ablegereife des Seils rechtzeitig zu bestimmen oder vorhersagen zu können.

Die EP 1 930 497 A und EP 1 930 496 A offenbaren die Verwendung einer elektrisch leitfähigen Indikatorfaser, die eine gegenüber den übrigen Litzen oder Fasern des Seiles geringere Widerstandsfähigkeit gegen Abrieb aufweist. Wenn die Indikatorfaser geschädigt wird oder reißt, ist dies anhand von Leitfähigkeitsmessungen feststellbar.

Dieser Zugang ist nachteilig, da er zusätzliche Leitfähigkeitsmessungen erfordert und damit verbunden die nötige technische Infrastruktur wie Stromquelle, Leitfähigkeitsmessgerät, Anschlussstellen für die Indikatorfaser.

Ebenfalls sind Verfahren bekannt, welche die Längung des Seiles über die Lebensdauer als Bewertungskriterium für den Zustand des Seiles sowie die Vorhersage der Ablegereife heranziehen und auf verschiedene Weise bestimmen, so z.B. aus der EP 2 002 051 A. In genanntem Dokument sind auf dem Mantel eines Kern-/Mantelseiles Markierungen (z.B. Flechtrauten aus unterschiedlich gefärbtem Material) vorgesehen, anhand derer man Längungen oder auch Verdrehungen des Seiles feststellen kann.

Aus der DE 20 2013 101 326 U1 ist die Verwendung eines elektrisch leitenden Sensorfadens bekannt. Die WO 2003/054290 A1 schlägt ein ferromagnetisches Material vor, mit welchem man auch lokale Schädigung des Seiles erkennen können soll.

Weiterer Stand der Technik ist aus US 2003/111298, der JP 2001/192183, WO 2004/029343, US 2005/226584, EP 1 905 892, WO 2015/139842, EP 1 530 040, US 2003/062225, US 2003/062226, JP H10318741, EP 1 010 803, EP 0 731 209, DE 22 22 312 A und US 6 321 520 B1 bekannt.

Der Einsatz von Fasern mit unterschiedlichem Dehnverhalten in einem Seil wird in der DE 24 55 273 B2 beschrieben und soll dazu dienen, dass alle Litzenlagen des Seiles Last übernehmen, nicht jedoch zur Anzeige des Verschleißes. Erwähnenswert ist weiters, dass in dieser Offenbarung im deutlichen Unterschied zu vorliegender Erfindung, Fasern mit geringerer Festigkeit im Inneren des Seiles angeordnet sind.

Weiter offenbart die EP2434050A1 ein Faserseil gemäß dem Oberbegriff des Anspruchs 1, das in das Seil eingebettete Sensormodule umfasst, um Dehnungs- und Zerrüttungsbelastungen zu erfassen.

Der vorliegenden Erfindung liegt demgegenüber die Aufgabe zugrunde, ein verbessertes hochfestes Faserseil zu schaffen, das Nachteile des Standes der Technik vermeidet und letzteren in vorteilhafter Weise weiterbildet. Insbesondere soll eine einfache, gleichwohl verlässliche und präzise Bestimmung der Ablegereife und damit eine möglichst lange Einsatzzeit ermöglicht werden, ohne hierbei die Sicherheit des Faserseils zu beeinträchtigen.

Die genannte Aufgabe wird durch ein hochfestes Faserseil gemäß Anspruch 1 sowie ein Hebezeug mit einem solchen hochfesten Faserseil gemäß Anspruch 10 gelöst. Bevorzugte Ausgestaltungen der Erfindung sind Gegenstand der abhängigen Ansprüche.

Es wird also vorgeschlagen, die Ummantelung des Seilkerns derart auszubilden, dass Schädigungen der Ummantelung nicht überall gleichzeitig, sondern partiell sowie nach und nach eintreten, anhand derer graduell verschiedene Schädigungsstufen und Verschleißzustände bestimmbar sind. Die Ummantelung besitzt einen Faseraufbau aus verschiedenartigen Synthetikfasern, die unterschiedliche Verschleißfestigkeiten besitzen und somit auch bei an sich gleichmäßiger Beaufschlagung mit verschleißfördernden Einflüssen nicht alle gleichzeitig Schädigungen zeigen, sondern nach und nach verschleißen. Erfindungsgemäß besitzt die Ummantelung zumindest eine Mantelschicht, in der Kunststofffasern unterschiedlicher Abrieb- und/oder Zugfestigkeit und/oder Biegewechselstandfestigkeit miteinander verflochten sind, wobei durch die Kunststofffasern unterschiedlicher Abrieb- und/oder Zugfestigkeiten und/oder Biegewechselstandfestigkeiten ein Grad der Schädigung optisch beurteilbar ist. Gegebenenfalls besitzt die Ummantelung mehrere Mantelschichten, die sich hinsichtlich ihres Faseraufbaus und den Abrieb- und/oder Zugfestigkeiten und/oder Biegewechselstandfestigkeiten der in den Mantelschichten verwendeten Kunststofffasern voneinander unterscheiden.

Die Erfindung sieht somit zumindest eine Mantelschicht mit Kunststofffasern mit unterschiedlichen Abnutzungseigenschaften vor. Andere Varianten der Erfindung sehen zusätzlich mehrere Mantelschichten vor, die jeweils Fasern mit unterschiedlichen Abnutzungseigenschaften aufweisen oder Fasern mit unterschiedlichen Abnutzungseigenschaften innerhalb der jeweiligen Mantelschichten aufweisen. Bevorzugt liegt die Mantelschicht, welche Fasern mit unterschiedlichen Abnutzungseigenschaften enthält, im äußeren Bereich der Ummantelung, besonders bevorzugt in der äußersten Schicht des Seiles vor.

Die unterschiedlichen Abrieb- und/oder Zugfestigkeiten und/oder Biegewechselstandfestigkeit der in der zumindest einen Mantelschicht verwendeten Kunststofffasern gewährleistet, dass Schädigungen der Mantelschicht nur partiell und nach und nach eintreten, sodass anhand der nach und nach zunehmenden Schädigungsstellen verschiedene Verschleißzustände des Seils und der damit einhergehende, noch verbleibende Abstand zur Ablegereife graduell bestimmbar und quantifizierbar sind.Die Bestimmung des Grades der Schädigung erfolgt dabei durch optische Beurteilung. Bevorzugt liegen daher die Fasern unterschiedlicher Abrieb- und/oder Zugfestigkeit und/oder Biegewechselstandfestigkeit in von außen sichtbaren, optisch zugänglichen und somit besonders bevorzugt in den äußeren bzw. äußersten Bereichen der Ummantelung vor. Auch ist der Mantel im Wesentlichen nicht-lasttragend ausgeführt.

Vorteilhafterweise können die in der zumindest einen Mantelschicht miteinander verflochtenen Kunststofffasern aus verschiedenen Werkstoffen bestehen. Beispielsweise können in einer Mantelschicht HMPE-Fasern und Polyesterfasern miteinander verflochten sein. Alternativ oder zusätzlich können auch weitere der eingangs genannten Fasern wie beispielsweise PBO-Fasern und/oder Aramid-Kohlefasermisch-Fasern miteinander verflochten bzw. in die vorgenannte Mantelschicht mit eingeflochten sein.

Wenn mehrere Mantelschichten vorgesehen sind, so können sich diese hinsichtlich ihres Faseraufbaus, z.B. aus verschiedenartigen Synthetikfasern und den Abrieb- und/oder Zugfestigkeiten und/oder Biegewechselstandfestigkeit der in den bzw. innerhalb der Mantelschichten verwendeten Synthetikfasern voneinander unterscheiden.

Beispielsweise können in einer ersten, äußeren Mantelschicht verschiedene Kunststofffasern vorgesehen sein, die sich hinsichtlich ihrer Abrieb-, Biegewechsel- und/oder Zugfestigkeit von allen Kunststofffasern in einer zweiten, darunter liegenden Mantelschicht unterscheiden. Vorteilhafterweise können auch in jeder Mantelschicht Kunststofffasern einer bestimmten Abriebs- und/oder Zugfestigkeit vorgesehen sein, die in keiner anderen Mantelschicht vorgesehen sind, sodass jede Mantelschicht eine charakteristische Festigkeit gegenüber Abrieb und Bruchschädigungen zeigt, die in jeder Mantelschicht zu einem partiell anderen Schädigungsbild führen. Dies macht es nach Versagen des äußeren Mantels leicht, immer tiefergehende Schädigungen voneinander in einfacher Weise zu unterscheiden.

Die in den verschiedenen Mantelschichten verwendeten Synthetikfasern können auch aus unterschiedlichen Werkstoffen bestehen, beispielsweise dergestalt, dass in einer ersten Mantelschicht Kunststofffasern eines Werkstoffs vorgesehen sind, die nicht in einer zweiten Mantelschicht vorhanden sind.

Alternativ oder zusätzlich zu von Schicht zu Schicht verschiedenen Fasern können die Mantelschichten der Ummantelung auch unterschiedliche Schichtdicken besitzen und/oder es können von Schicht zu Schicht unterschiedlich dicke Kunststofffasern und/oder -litzen vorgesehen sein. Durch die Verwendung unterschiedlicher dicker Kunststofffasern können von Schicht zu Schicht unterschiedliche Schädigungsbilder erzielt werden. Auch durch die Verwendung unterschiedlich großer Schichtdicken, die beispielsweise von außen nach innen zunehmen können, kann sichergestellt werden, dass immer tiefer gehende Schädigungen immer schwerer auftreten und zunächst nur leichtere Schädigungen, die von der Ablegereife noch relativ weit entfernt sind, zunächst an der Außenschicht auftreten und damit leicht erkennbar sind.

Wenn mehrere Mantelschichten vorgesehen sind, liegen bevorzugt jedenfalls in der äußersten Mantelschicht die Fasern unterschiedlicher Abrieb- und/oder Zugfestigkeit und/oder Biegewechselstandfestigkeit vor.

Die Verwendung von Kunststofffasern unterschiedlicher Faserdicke und/oder unterschiedlicher Litzendicke kann auch in einer Mantelschicht sinnvoll sein, um in einer Mantelschicht partiell unterschiedliche Schädigungsbilder zu erzielen.

Um eine leichte Erkennbarkeit der verschiedenen Schädigungen auch bei nur kleineren Ausmaßen der Schädigungen leicht zu ermöglichen, können die Kunststofffasern, die unterschiedliche Abrieb-, Biegewechsel- und/oder Zugfestigkeiten besitzen und/oder aus unterschiedlichen Werkstoffen bestehen, in unterschiedlichen Farben eingefärbt sein. Alternativ oder zusätzlich können auch von Mantelschicht zu Mantelschicht unterschiedliche Farben Verwendung finden bzw. verschiedene Mantelschichten verschiedenfarbig eingefärbt sein. Hierdurch wird die optische Erfassung von Schädigungen der Ummantelung deutlich erleichtert, da bei Verschlei-ßen einer äußeren Mantelschicht die darunterliegende Mantelschicht in anderer Farbe oder Farbkombination sichtbar wird.

Insbesondere kann auch der Seilkern eine andere Farbe besitzen als die Ummantelung, insbesondere eine andere Farbe als die unterste bzw. innerste Mantelschicht der Ummantelung, sodass spätestens bei einem vollständigen Verschleißen der Ummantelung die andere Farbe des Seilkerns sichtbar wird.

Die Bestimmung der Ablegereife kann anhand von Referenzdarstellungen des Seils in unterschiedlichen Schädigungsgraden durch eine sachkundige Person wie beispielsweise den Kranführer als Sichtprüfung durchgeführt werden, der die aufgetretenen Schäden einkategorisieren, schriftlich festhalten und aufsummieren kann, um dann ggfs. die Ablegereife zu bestimmen oder einen Sachverständigen hinzuzuziehen.

Die Erfindung wird nachfolgend anhand eines bevorzugten Ausführungsbeispiels und zugehöriger Zeichnungen näher erläutert. In den Zeichnungen zeigen:
- Fig. 1 bis Fig. 5:: jeweils eine Seitenansicht eines hochfesten Faserseils mit einer geflochtenen Ummantelung, wobei der an der Ummantelung auftretende Mantelverschleiß in unterschiedlichen Schädigungsgraden dargestellt ist und nach und nach der Seilkern zu Tage tritt,
- Fig. 6 bis Fig. 9:: jeweils eine Draufsicht auf einen Abschnitt eines hochfesten Faserseils mit einer Ummantelung nach einer weiteren Ausführung der Erfindung, wobei hier als Schädigungen der Ummantelung Einschnitte am Seil in verschiedenen Ausprägungsstufen dargestellt sind, und
- Fig. 10 bis Fig. 13:: jeweils einen Abschnitt eines hochfesten Faserseils mit einer Ummantelung nach einer weiteren Ausführung der Erfindung, wobei Schädigungen der Ummantelung in Form einer Quetschung / lokalen Verdickung des Seils in verschiedenen Ausprägungsstufen dargestellt ist.

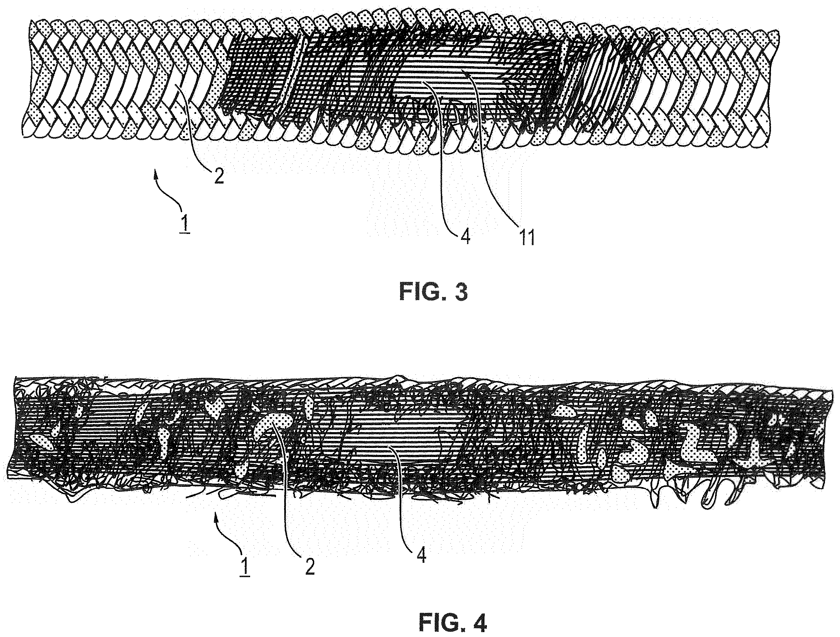

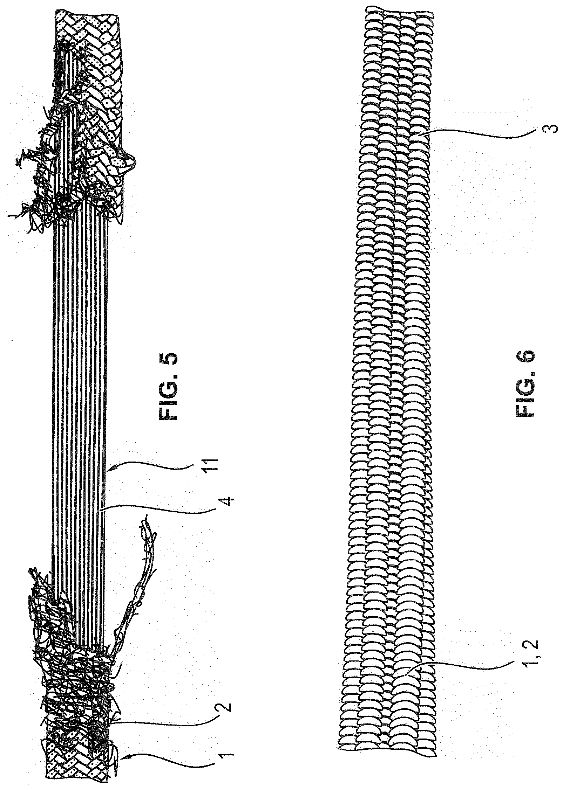

Wie beispielsweise die Figuren 4 und 5 zeigen, umfasst das hochfeste Faserseil einen Seilkern 11, der aus Litzen 4 geflochten oder geschlagen sein kann, die wiederum aus hochfesten Synthetikfasern bestehen oder zumindest solche hochfesten Synthetikfasern umfassen, beispielsweise HPMA-Fasern, HMPE-Fasern oder andere der eingangs genannten Fasertypen, wobei der genannte Seilkern 11 aus Fasern eines Fasertyps oder Fasern verschiedener Fasertypen bestehen kann.

Die Ummantelung 2 umgibt den genannten Seilkern 11 und kann unmittelbar auf dem genannten Seilkern sitzen oder ggfs. durch eine Zwischenschicht hiervon beabstandet sein. Die genannte Ummantelung 2 kann insbesondere den Außenmantel des Seils 1 bilden. Der Seilkern 11 kann die gesamte angegebene Zugfestigkeit des Seils 1 übernehmen. Die Ummantelung 2 wirkt nur darüber hinaus unterstützend, insbesondere als Schutz für den Seilkern 11 und als Verschleißindikator.

Die genannte Ummantelung 2 kann hierbei aus einer einzigen Mantelschicht bestehen oder auch mehrere Mantelschichten umfassen, die übereinanderliegend angeordnet sind.

Wie die Figuren zeigen, umfasst die genannte Ummantelung 2 Litzen 3, die miteinander zu der Ummantelung 2 geflochten sind und jeweils aus hochfesten Synthetikfasern bestehen können oder solche hochfesten Synthetikfasern zumindest aufweisen können.

Insbesondere können die genannten Litzen 3 der Ummantelung 2 in der eingangs ausführlich beschriebenen Weise aus unterschiedlichen Kunstfasern verschiedener Abrieb- und Zugfestigkeiten und weiter gegebenenfalls unterschiedlicher Werkstoffe gebildet sein. Wie die Figuren zeigen, sind die genannten Litzen 3 vorteilhafterweise in verschiedenen Farben eingefärbt.

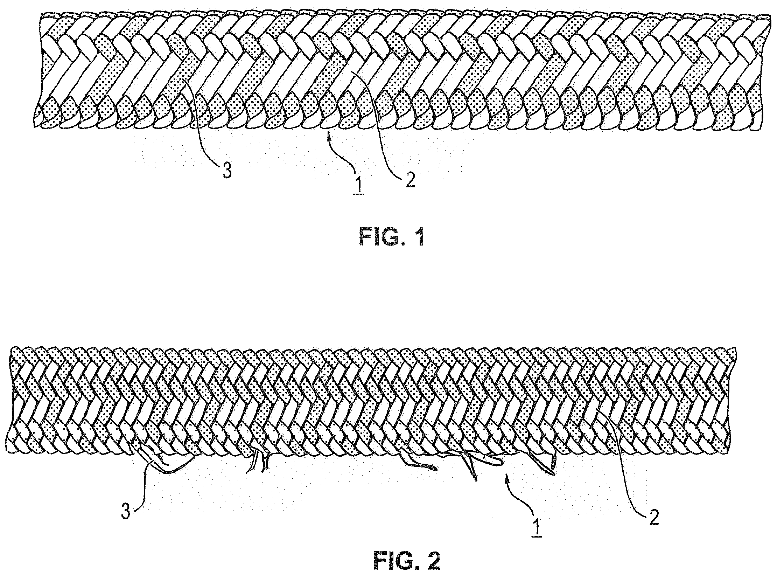

In den Figuren 1 bis 5 ist ein Mantelverschleiß der Ummantelung 2 dargestellt, der beispielsweise durch den Seiltrieb bedingt sein kann, insbesondere die Umlenkung des Seils um die Seilrolle, die Biegewechsel im Seilverlauf, die Seilreibung auf der Trommel beim Spulen und auch die Beanspruchung bei einer mehrlagigen Aufwicklung auf der Trommel, bei der die Seilabschnitte einer oberen Lage zwischen die Seilabschnitte einer unteren Lage einzuschneiden drohen.
- Fig.1: zeigt das Seil 1 mit Ummantelung 2 und die Litzen 3 der Ummantelung in unterschiedlichen Farben. Grad der gezeigten Schädigung ca. 5% der Ablegereife.
- Fig.2: zeigt das Seil 1 mit Ummantelung 2 jedoch mit sichtbarem Verschleiß der einzelnen Litzen 3 des Mantels. Grad der gezeigten Schädigung ca. 25% der Ablegereife.
- Fig.3: zeigt das Seil 1, dessen Ummantelung über einen Teilabschnitt von ca. 90° verschlissen ist und die Litzen 4 des tragenden Seilkernes sichtbar werden. Grad der gezeigten Schädigung ca. 50% der Ablegereife.
- Fig.4: zeigt das Seil 1, dessen Ummantelung einen fortgeschrittenen Verschleißzustand in einem Teilabschnitt von ca. 180° aufweist und die Litzen 4 des tragenden Seilkernes in diesem Teilabschnitt gut sichtbar sind. Grad der gezeigten Schädigung ca. 75% der Ablegereife.
- Fig.5: zeigt das Seil 1, dessen Ummantelung einen stark fortgeschrittenen Verschleißzustand über den gesamten Seilumfang (360°) aufweist. Der Mantel ist verschlissen und verschoben und die Litzen 4 des tragenden Seiles sind in diesem Teilabschnitt voll sichtbar. Grad der gezeigten Schädigung 100% der Ablegereife.
- Die Figuren 6 bis 9: zeigen eine Schädigung des Seils in Form von Einschnitten, die zu einem sich graduell ausbreitenden Schädigungsgrad führen.
- Fig.6: zeigt das Seil 1 mit Ummantelung 2 und die Litzen 3 der Ummantelung in unterschiedlichen Farben. Grad der gezeigten Schädigung 0% der Ablegereife.

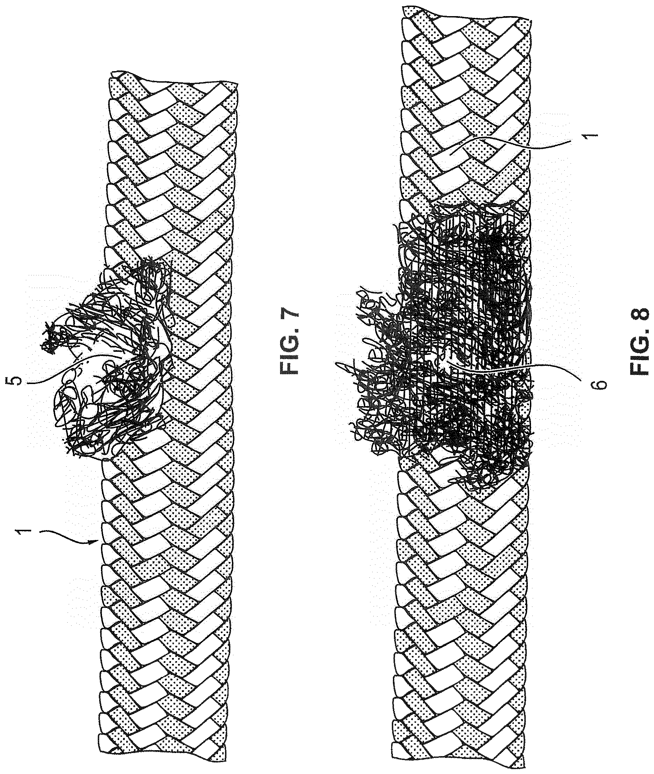

- Fig.7: zeigt das Seil 1, dessen Ummantelung einen sichtbar leichten Einschnitt 5 aufweist. Grad der gezeigten Schädigung ca. 25% der Ablegereife.
- Fig.8: zeigt das Seil 1, dessen Ummantelung und eine Litze des tragenden Seiles einen sichtbaren Einschnitt 6 aufweisen. Grad der gezeigten Schädigung ca. 50% der Ablegereife.

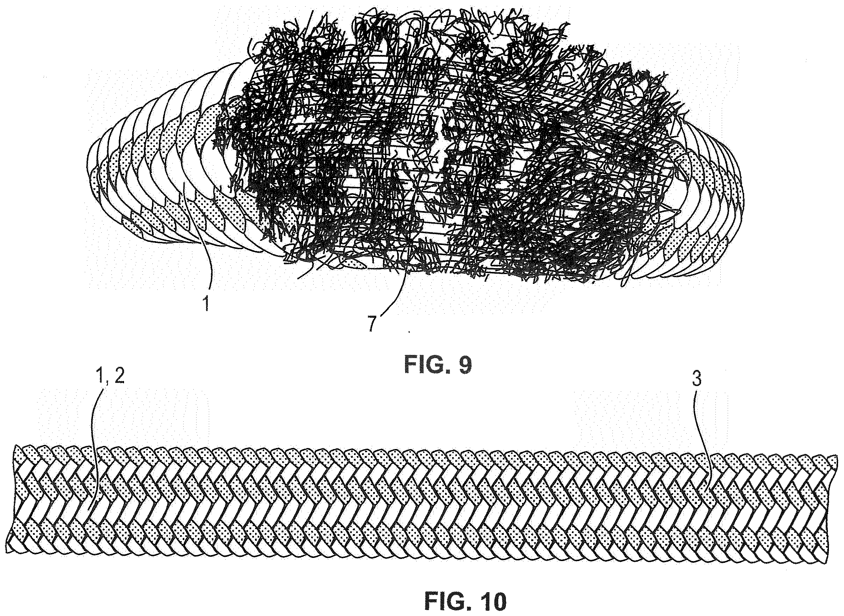

- Fig.9: zeigt das Seil 1, dessen Ummantelung und mindestens eine Litze des tragenden Seiles einen sichtbaren Durchschnitt 7 aufweisen. Grad der gezeigten Schädigung 100% der Ablegereife.

- Die Figuren 10 bis 13: zeigen schließlich eine Schädigung des hochfesten Faserseils in Form von Quetschungen des Seiles.
- Fig.10: zeigt das Seil 1 mit Ummantelung 2 und die Litzen 3 der Ummantelung in unterschiedlichen Farben. Grad der gezeigten Schädigung 0% der Ablegereife.

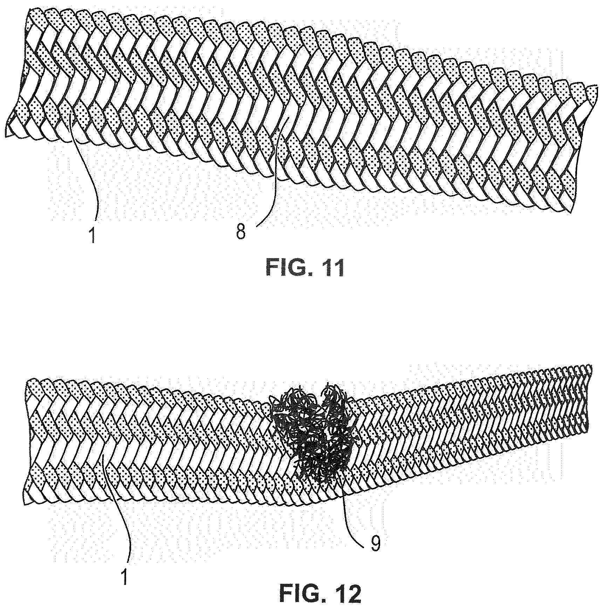

- Fig.11: zeigt das Seil 1 mit einer leichten Quetschung 8 und Ovalisierung des Seilquerschnittes. Grad der gezeigten Schädigung ca. 25% der Ablegereife.
- Fig.12: zeigt das Seil 1 mit einer starken Quetschung 9 und einer starken Ovalisierung des Seilquerschnittes. Grad der gezeigten Schädigung ca. 50% der Ablegereife.

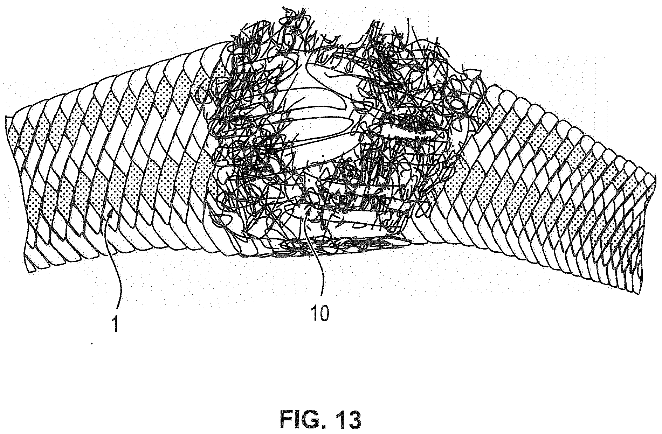

- Fig.13: zeigt das Seil 1 mit einer so starken Quetschung 10, dass der Mantel offen ist und die beschädigten Litzen des tragenden Seilkernes austreten. Grad der gezeigten Schädigung 100% der Ablegereife.

## Patentansprüche

1. Hochfestes Faserseil für Hebezeuge wie Krane, mit einem Seilkern (11), der hochfeste Kunststofffasern oder -litzen (4) umfasst, sowie einer den Seilkern (11) umgebenden, verschleißanzeigenden Ummantelung (2), **dadurch gekennzeichnet, dass** die Ummantelung (2) zumindest eine Mantelschicht aufweist, in der Kunststofffasern unterschiedlicher Abrieb- und/oder Zugfestigkeiten und/oder Biegewechselstandfestigkeiten miteinander verflochten sind, wobei durch die Kunststofffasern unterschiedlicher Abrieb- und/oder Zugfestigkeiten und/oder Biegewechselstandfestigkeiten ein Grad der Schädigung der Mantelschicht optisch beurteilbar ist.

2. Hochfestes Faserseil nach dem vorhergehenden Anspruch 1, wobei die Kunststofffasern in der genannten zumindest einen Mantelschicht aus verschiedenen Werkstoffen bestehen, vorzugsweise HMPE-Fasern und Polyesterfasern umfassen.

3. Hochfestes Faserseil nach Anspruch 1 oder 2, **dadurch gekennzeichnet, dass** die Mantelschicht, welche Fasern mit unterschiedlichen Verschleißeigenschaften enthält, im äußeren Bereich der Ummantelung, besonders bevorzugt in der äußersten Schicht des Seiles vorliegt.

4. Hochfestes Faserseil nach einem der vorhergehenden Ansprüche, wobei die Ummantelung (2) mehrere Mantelschichten aufweist, die sich hinsichtlich ihres Faseraufbaus und den Abriebs- und/oder Zugfestigkeiten und/oder Biegewechselstandfestigkeiten der in den Mantelschichten verwendeten Kunststofffasern voneinander unterscheiden.

5. Hochfestes Faserseil nach Anspruch 4, wobei in einer Mantelschicht Kunststofffasern vorgesehen sind, die sich hinsichtlich ihrer Abrieb- und/oder Zugfestigkeit und/oder Biegewechselstandfestigkeiten und/oder ihres Werkstoffs von allen Kunststofffasern zumindest einer weiteren Mantelschicht unterscheiden.

6. Hochfestes Faserseil nach einem der vorhergehenden Ansprüche, wobei die Ummantelung (2) Mantelschichten unterschiedlicher Schichtdicken und/oder von Schicht zu Schicht unterschiedlich dicke Kunststofffasern und/oder -litzen besitzt.

7. Hochfestes Faserseil nach einem der vorhergehenden Ansprüche, wobei die Kunststofffasern, die unterschiedliche Abrieb- und Zugfestigkeiten besitzen und gegebenenfalls aus unterschiedlichen Werkstoffen bestehen, in unterschiedlichen Farben eingefärbt sind.

8. Hochfestes Faserseil nach einem der vorhergehenden Ansprüche, wobei der Seilkern (11) eine von der Ummantelung (2) abweichende Farbe besitzt.

9. Hochfestes Faserseil nach einem der vorhergehenden Ansprüche, wobei die Ummantelung (2) des Seilkerns (11) den Außenmantel des Seils (1) bildet.

10. Hebezeug, insbesondere Kran wie Turmdrehkran, Teleskop-, Hafen- oder Schiffskran, mit einem hochfesten Faserseil (1), das gemäß einem der vorhergehenden Ansprüche ausgebildet ist.

11. Hebezeug gemäß Anspruch 10, wobei das hochfeste Faserseil (1) ein Kranhubseil oder ein Kranauslegerabspannseil bildet.

## Claims

1. A high-strength fibre rope for hoisting equipment like cranes having a rope core (11) comprising high-strength synthetic fibres or strands (4) as well as a sheathing (2) surrounding the rope core (11) and indicating wear, **characterized in that** the sheathing (2) has at least one sheath layer, in which synthetic fibres having different wear resistance and/or tensile strength and/or bending fatigue are interwoven with each other, wherein an extent of damage of the sheath layer can be optically inspected by virtue of the synthetic fibres having different wear resistance and/or tensile strength and/or bending fatigue.

2. A high-strength fibre rope according to the preceding claim 1, wherein the synthetic fibres in said at least one sheath layer are composed of various materials and comprise preferably HMPE fibres and polyester fibres.

3. A high-strength fibre rope according to claim 1 or 2, **characterized in that** the sheath layer containing fibres having various wear properties is in the outermost area of the sheathing, especially preferably in the outermost layer of the rope.

4. A high-strength fibre rope according to any of the preceding claims, wherein the sheathing (2) has several sheath layers, which differ from each other in regard to the fibre structure thereof and the wear resistance and/or tensile strength and/or bending fatigue of the synthetic fibres used in the sheath layers.

5. A high-strength fibre rope according to claim 4, wherein there are provided synthetic fibres in a sheath layer, which differ from any other synthetic fibres of at least one further sheath layer in regard to the wear resistance and/or tensile strength thereof and/or bending fatigue and/or the material thereof.

6. A high-strength fibre rope according to any of the preceding claims, wherein the sheathing (2) has sheath layers of different layer thicknesses and/or synthetic fibres and/or strands with different thicknesses from layer to layer.

7. A high-strength fibre rope according to any of the preceding claims, wherein the synthetic fibres, which exhibit different wear resistance and tensile strength and are optionally composed of different materials are dyed in different colours.

8. A high-strength fibre rope according to any of the preceding claims, wherein the rope core (11) has a colour deviating from that of the sheathing (2).

9. A high-strength fibre rope according to any of the preceding claims, wherein the sheathing (2) of the rope core (11) forms the outer sheath of the rope (1).

10. Hoisting equipment, in particular cranes such as a tower slewing crane, a telescopic crane, a dockside crane or a ship crane, comprising a high-strength fibre rope (1) configured according to any of the preceding claims.

11. Hoisting equipment according to claim 10, wherein the high-strength fibre rope (1) forms the crane hoist rope or a crane boom suspension rope.

## Revendications

1. Câble de fibre à haute résistance pour des engins de levage tels que des grues, avec un noyau de câble (11) qui comprend des fibres ou des torons en matière plastique à haute résistance (4), ainsi qu'une enveloppe à indication d'usure (2) entourant le noyau de câble (11), **caractérisé en ce que** l'enveloppe (2) comporte au moins une couche de revêtement dans laquelle des fibres en matière plastique dotées de résistances à l'abrasion et/ou à la traction et/ou de résistances à la flexion différentes sont entrelacées les unes avec les autres, un degré d'endommagement de la couche de revêtement pouvant être évalué visuellement à l'aide de ces fibres en matière plastique dotées de résistances à l'abrasion et/ou à la traction et/ou de résistances à la flexion différentes.

2. Câble de fibre à haute résistance selon la revendication 1 ci-dessus, dans lequel les fibres en matière plastique dans l'au moins une couche de revêtement susmentionnée sont constituées de différents matériaux et comprennent de préférence des fibres de HMPE et des fibres de polyester.

3. Câble de fibre à haute résistance selon la revendication 1 ou 2, **caractérisé en ce que** la couche de revêtement qui contient des fibres dotées de propriétés d'usure différentes se trouve dans la zone externe de l'enveloppe, de manière particulièrement préférée dans la couche la plus extérieure du câble.

4. Câble de fibre à haute résistance selon une des revendications précédentes, dans lequel l'enveloppe (2) comporte plusieurs couches de revêtement qui se différencient les unes des autres par leur structure de fibres et par les résistances à l'abrasion et/ou à la traction et/ou les résistances à la flexion des fibres en matière plastique utilisées dans les couches de revêtement.

5. Câble de fibre à haute résistance selon la revendication 4, dans lequel dans une couche de revêtement sont prévues des fibres en matière plastique qui se différencient, du point de vue de leur résistance à l'abrasion et/ou à la traction et/ou de leurs résistances à la flexion et/ou de leur matériau, de toutes les fibres de matière plastique d'au moins une autre couche de revêtement.

6. Câble de fibre à haute résistance selon une des revendications précédentes, dans lequel l'enveloppe (2) comprend des couches de revêtement d'épaisseurs de couche différentes et/ou des fibres et/ou des torons en matière plastique d'épaisseurs différentes d'une couche à l'autre.

7. Câble de fibre à haute résistance selon une des revendications précédentes, dans lequel les fibres en matière plastique qui possèdent des résistances à l'abrasion et à la traction différentes et sont constituées le cas échéant de matières différentes sont teintées dans des couleurs différentes.

8. Câble de fibre à haute résistance selon une des revendications précédentes, dans lequel le noyau de câble (11) possède une couleur différente de l'enveloppe (2).

9. Câble de fibre à haute résistance selon une des revendications précédentes, dans lequel l'enveloppe (2) du noyau de câble (11) forme la gaine extérieure du câble (1).

10. Engin de levage, en particulier grue telle qu'une grue pivotante sur pylône, une grue télescopique, une grue portuaire ou une grue de bateau, avec un câble de fibre à haute résistance (1) qui est configuré selon une des revendications précédentes.

11. Engin de levage selon la revendication 10, sur lequel le câble de fibre à haute résistance (1) constitue un câble de traction de grue ou un câble de haubanage de flèche de grue.
